# FASCICULE DE BREVET EUROPEEN

(11) **EP 0 839 328 B1**
(45) Date de publication et mention de la délivrance du brevet: **13.02.2002**
(21) Numéro de dépôt: 97918189.8
(22) Date de dépôt: 09.04.1997
(51) Int. Cl.: G01V 1/28

(54) **PROCEDE DE LOCALISATION ET D'IDENTIFICATION DES ANOMALIES D'UN MILIEU**
VERFAHREN ZUR ORTUNG UND IDENTIFIZIERUNG VON ANOMALIEN EINES MEDIUMS
METHOD FOR LOCATING AND IDENTIFYING SITE ANOMALIES

(30) Priorité: 15.04.1996 FR 9604681
(43) Date de publication de la demande: 06.05.1998
(73) Titulaire: Elf Exploration Production, 92400 Courbevoie (FR)
(72) Inventeur: KESKES, Naamen, F-64000 Pau (FR); BIDEGARAY, André, F-64510 Bordes (FR)
(74) Mandataire: Levy, David
(86) Numéro de dépôt international: FR9700628
(87) Numéro de publication internationale: WO9739366

(56) Documents cités:
- EP-A- 0 562 687
- EP-A- 0 745 870
- GB-A- 2 226 884
- US-A- 4 747 054

## Description

La présente invention concerne un procédé de localisation et d'identification des anomalies d'un milieu tel que celui qui est exploré au cours de campagnes sismiques.

L'image d'un milieu exploré se présente généralement sous la forme d'une ou plusieurs sections sismiques à deux dimensions et on se réfère alors à la sismique 2D définie par des axes x et t ou par un bloc sismique à trois dimensions et on se réfère alors à la sismique 3D définie par des axes x, y, t ou z, t étant le temps et z étant la profondeur.

Dans un bloc sismique, un événement sismique est repéré d'une part, par les positions respectives du ou des points de tir d'une onde sismique et du ou des récepteurs associés audit point de tir, définies par leurs coordonnées selon les axes x et y et, d'autre part, le temps t mis par l'onde émise par le point de tir pour atteindre le récepteur correspondant ou par la cote z à laquelle il se trouve.

Une anomalie est considérée par les interprétateurs comme étant un événement sismique. L'étude des anomalies d'un milieu permet d'améliorer la connaissance du milieu car certaines des anomalies peuvent constituer des indices sur la présence ou non d'hydrocarbures dans ledit milieu, voir par exemple EP-A-0 562 687.

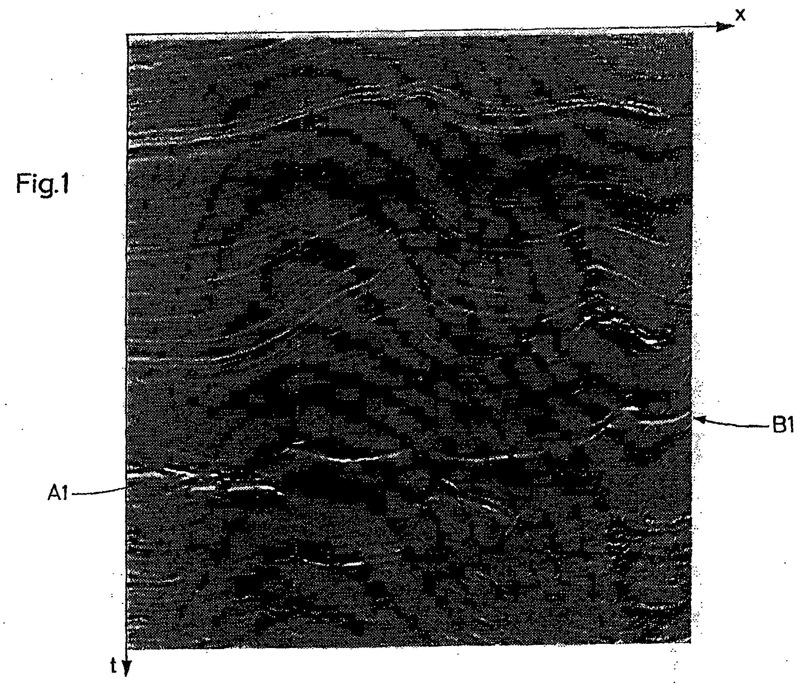

Le repérage des anomalies sur une section sismique qui comprend un grand nombre de traces sismiques préalablement rassemblées en fonction de critères bien définis, comme par exemple en points milieux communs (CMP), à récepteur commun, etc..., est effectué manuellement par l'interprétateur. En conséquence, la sélection ou le rejet d'une anomalie dépend du seul jugement de i'interprétateur et de sa capacité à interpréter correctement la section sismique. La figure 1 représente une section sismique (x, t) sur laquelle des anomalies, par exemple A₁ et B₁, sont pointées par l'interprétateur. Les anomalies pointées peuvent être considérées soit comme étant différentes, soit comme étant identiques ou de même nature. Si on se réfère à la section représentée sur la figure 1, à gauche et dans la deuxième moitié inférieure, on constate qu'il y a plusieurs anomalies A₁ qui se recouvrent en partie et il est difficile de se déterminer quant à leur nature. En présence d'une faille dans un milieu, on est souvent en présence d'au moins deux anomalies qui ne sont pas reliées entre elles. Ces deux anomalies qui sont à des niveaux différents peuvent être interprétées comme étant la même anomalie de part et d'autre de la faille ou deux anomalies différentes lorsque l'interprétateur considère que chacune d'elles est limitée par la faille sans qu'il puisse, de façon objective, lever l'ambiguïté.

De toutes les façons, le repérage manuel des anomalies ne peut pas prendre en considération toutes les anomalies surtout celles qui sont peu visibles et/ou masquées par d'autres anomalies.

La présente invention a pour but de proposer un procédé de localisation et d'identification de toutes les anomalies présentes entre deux niveaux prédéterminés qui peuvent être des horizons réels ou fictifs du milieu à explorer.

La présente invention a pour objet un procédé qui est caractérisé en ce qu'il consiste à :
- utiliser un bloc sismique donné composé de traces sismiques repérées par leurs coordonnées spatiales ;
- délimiter dans ledit bloc sismique au moins un intervalle temporel entre un niveau supérieur et un niveau inférieur ;
- sélectionner un modèle temporel d'une anomalie ;
- corréler ledit modèle avec chacune desdites traces comprises dans ledit intervalle temporel ;
- déterminer, pour chaque trace, la corrélation maximum et le temps correspondant de ladite corrélation maximum,
- réaliser une carte des corrélations maximales égale aux dimensions spatiales du bloc sismique et une carte desdits temps correspondant aux maxima de corrélation ; ladite carte des temps étant de mêmes dimensions et repérée dans le même système d'axes que ladite carte des maxima de corrélation.

Un avantage de la présente invention est de balayer automatiquement toute une section sismique en délimitant des intervalles successifs, contigus ou non, sur ladite section sismique.

Selon une autre caractéristique de l'invention, on segmente la carte des temps en un ensemble de zone connexes et homogènes, chaque zone connexe et homogène étant telle qu'un point de ladite zone comprend au moins un point voisin ne présentant pas une discontinuité en temps supérieure à un seuil donné (Δt).

Un autre avantage est de repérer chaque anomalie par ses composantes connexes.

Selon une autre caractéristique, on sélectionne toute zone homogène dont au moins un point présente un maximum de corrélation supérieur à un seuil prédéterminé de corrélation (S), chaque zone homogène présentant avantageusement une surface supérieure à une valeur donnée.

Un avantage réside dans le fait qu'on prend en considération toutes les anomalies et qu'on peut sélectionner les anomalies d'intérêt en fonction de critères prédéterminés. De ce fait, toutes les anomalies ne présentant pas ou présentant peu d'intérêt sont rejetées car statistiquement elles sont considérées comme étant non significatives.

Selon une autre caractéristique, chaque zone homogène est traitée individuellement par un propagateur de manière à étendre ladite zone dans toutes les directions tout en contrôlant la corrélation avec les traces sismiques voisines.

Ainsi, il est maintenant possible grâce à la présente invention, de déterminer les anomalies qui se recouvrent et qui seraient difficiles à repérer manuellement, tout en délimitant leur contour.

Selon une autre caractéristique, les zones homogènes et leur extension constituent des zones anomaliques qui sont organisées en un nombre de couches telles que dans chaque couche, deux zones anomaliques quelconques ne présentent aucun recouvrement entre elles, les couches étant par exemple ordonnées suivant une décroissance des maxima de corrélation

Un avantage lié à cette caractéristique provient du fait qu'on peut classer les anomalies entre elles, par exemple suivant des maxima de corrélation décroissant, les différents niveaux d'anomalies pouvant être stockés en mémoire.

Enfin, selon une autre caractéristique, on valide chaque anomalie en contrôlant les relations temps-corrélation de telle sorte que seules les anomalies présentant une corrélation maximum pour un temps minimum sont retenues ce qui permet, entre autre chose, de valider chacune des anomalies et de dresser des fiches signalétiques pour chaque anomalie. Chaque fiche signalétique peut comprendre des caractéristiques telles que l'amplitude, l'origine, les coordonnées spatiales, la surface, etc...

D'autres caractéristiques et avantages apparaîtront plus clairement à la lecture de la description d'un mode de réalisation préféré de l'invention, ainsi que des dessins annexés sur lesquels :
- la figure 1 est une représentation d'une section sismique 2D ;
- la figure 2 est une représentation schématique d'un bloc sismique (x, y, t) ;
- la figure 3 est une représentation schématique d'une trace sismique comprise dans un intervalle donné et le résultat de la corrélation avec un modèle d'anomalie;
- la figure 4 est une vue agrandie d'une partie d'une section sismique (x, t) et comportant des anomalies ;
- les figures 5a et 5b sont des représentations schématiques et partielles respectivement d'une carte de maxima de corrélation et d'une carte d'isochrones ;
- la figure 6 est une représentation schématique de composantes connexes ;
- la figure 7 est une représentation schématique du classement ou tri des anomalies ;
- la figure 8 est une représentation schématique d'une anomalie validée ;

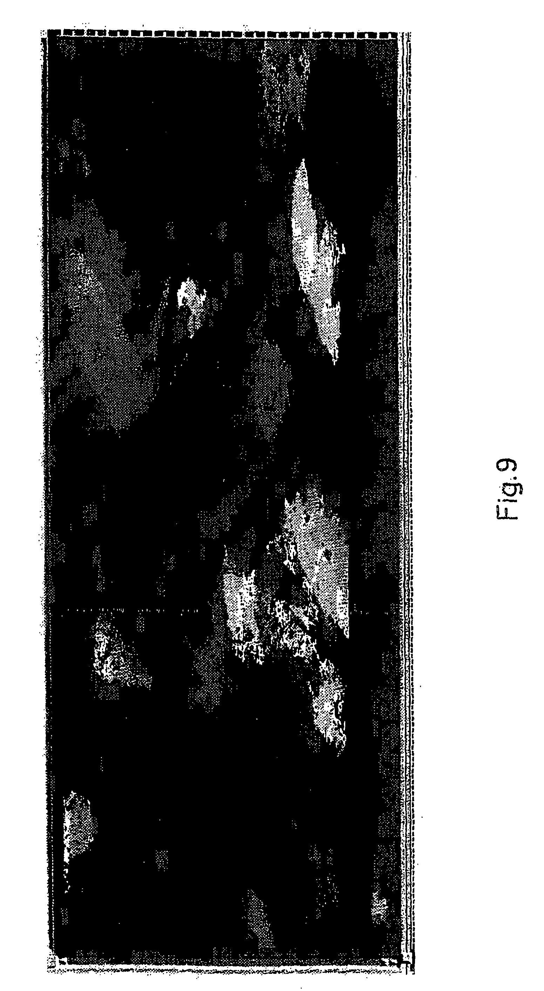

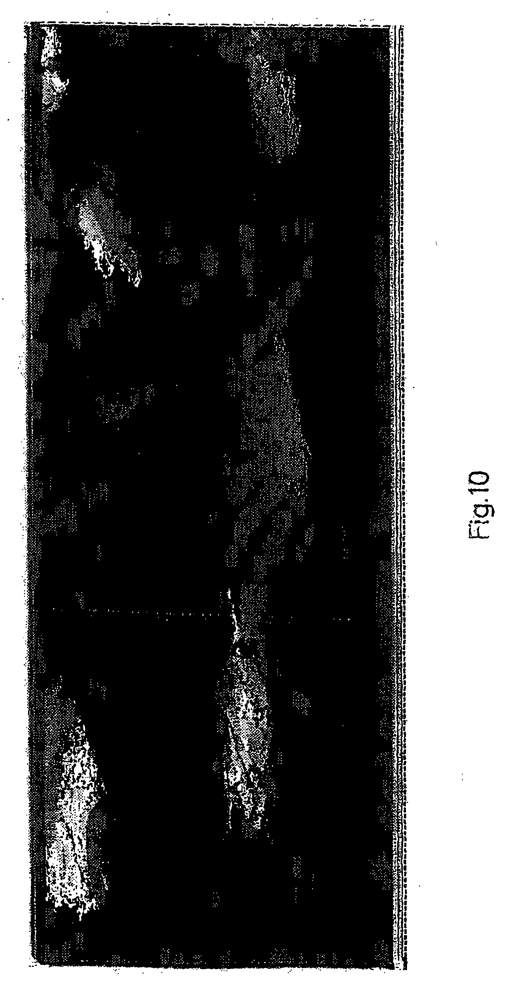

- les figures 9 et 10 sont des représentations des anomalies triées sur différents niveaux et issues du tri schématiques de la figure 7.

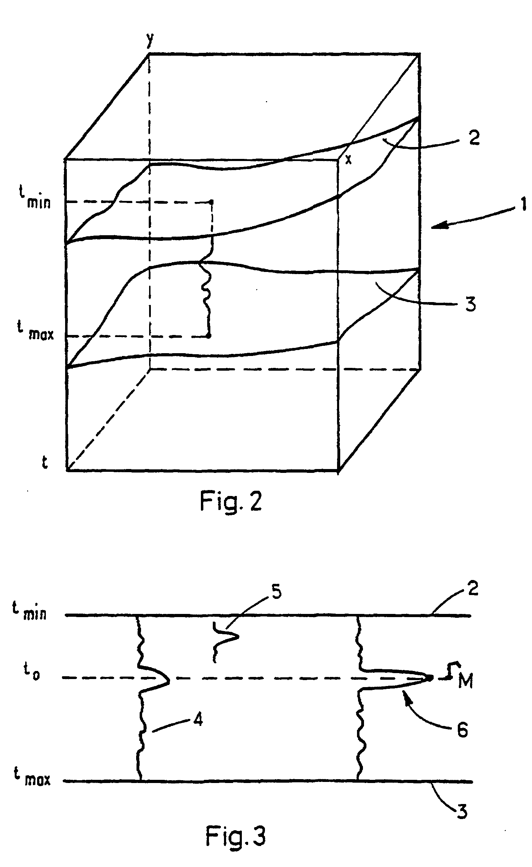

Selon la présente invention, on réalise un bloc sismique 3D qui est une représentation du milieu (figure 2) et qui comprend un grand nombre de traces sismiques issues par exemple d'une collection de traces en points milieux communs. Dans le bloc 1, on définit un intervalle temporel délimité par un niveau supérieur 2 et par un niveau inférieur 3, les niveaux supérieur 2 et inférieur 3 pouvant correspondre à des horizons réels ou fictifs mais qui en tout état de cause correspondent, pour l'intervalle considéré, à un temps minimum tₘᵢₙ et un temps maximum tₘₐₓ donnés.

Sur la figure 3, il est représenté une portion de trace sismique 4 comprise entre les niveaux 2 et 3 correspondant respectivement aux temps tₘᵢₙ et tₘₐₓ. Un modèle 5, représentatif d'une anomalie est représenté sous la forme d'un signal.

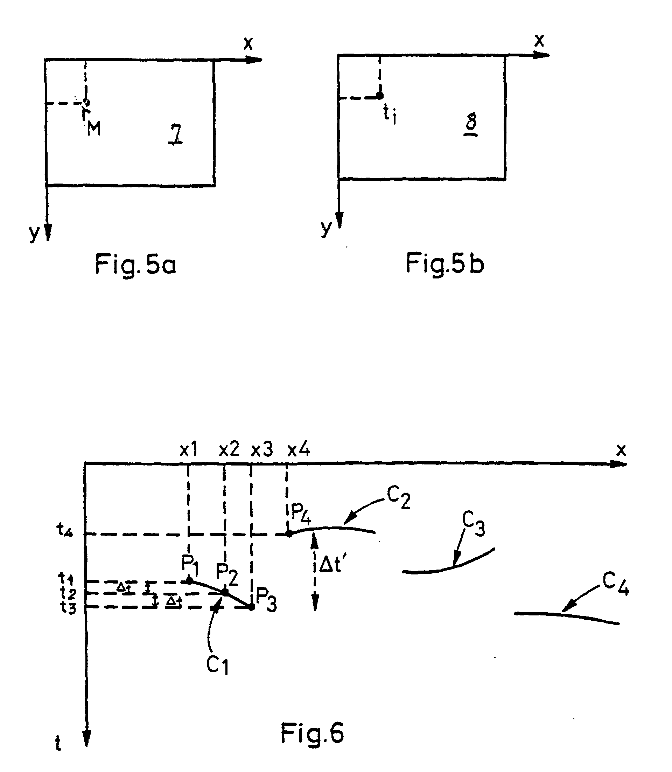

Dans une première étape, on corrèle le modèle 5 avec la portion de trace 4 de manière à obtenir un signal corrélé 6 dont le maximum de corrélation est Γ_{M}. On relève le temps ou indice tₒ du maximum de corrélation Γ_{M}. Puis on recommence cette étape pour toutes les portions des traces sismiques comprises entre les niveaux 2 et 3 de sorte qu'on obtient des valeurs de maxima de corrélation Γ_{M} et d'indices tᵢ. Ceci permet d'établir deux cartes 7 et 8 dont l'une 7 correspond aux maxima de corrélation Γ (figure 5a) et dont l'autre 8 correspond aux indices tᵢ (figure 5b), cette dernière carte étant appelée carte isochrone. Les deux cartes 7 et 8 présentent des dimensions égales aux dimensions spatiales du bloc 1 et elles sont repérées dans un même système d'axes x, y par exemple.

Dans une deuxième étape, on procède au tri des anomalies. A cet effet, on se fixe d'abord un seuil S de corrélation et on ne conserve que les anomalies présentant un maximum de corrélation Γ_{M} supérieur au seuil S, puis on effectue une extension significative de chaque anomalie pour rechercher les composantes connexes de l'anomalie, ladite extension étant effectuée sur les anomalies dont le maximum de corrélation est supérieur à S. La recherche des composantes connexes est effectuée sur une carte des isochrones (figure 6) sur laquelle on a reporté par exemple quatre points P₁ à P₄ de coordonnées (t₁,x₁), (t₂,x₂), (t₃,x₃) et (t₄,x₄) et correspondant à quatre traces sismiques consécutives. Deux points P, Q appartiennent à une composante connexe s'il existe un chemin formé par des points de la composante connexe et reliant P à Q. Deux points voisins Pᵢ (xᵢ, tᵢ) et Pⱼ (xⱼ, tⱼ) appartiennent à une même composante connexe si |tⱼ - tᵢ| < Δt où Δt est une valeur de seuil prédéterminée. Ainsi, sur la figure 6, les points P₁ à P₃ appartiennent à une même composante connexe car lt₂ - t₁ | < Δt et |t₃ - t₂| < Δt. Par contre, le point P₄(x₄, t₄) n'appartient pas à cette composante connexe car |t₄ - t₃| = Δt' > Δt.

Un autre critère de sélection ou de tri pourrait consister à rejeter toutes les anomalies présentant un maximum de corrélation supérieur à S, mais dont la taille est inférieure à une taille donnée.

On numérote ensuite les composantes connexes C₁, C₂, C₃, et C₄... de sorte que la carte des isochrones comprend des composantes connexes numérotées,

Dans une troisième étape, on soumet chaque anomalie à une extension au moyen d'un propagateur afin de résoudre le problème des recouvrements entre anomalies.

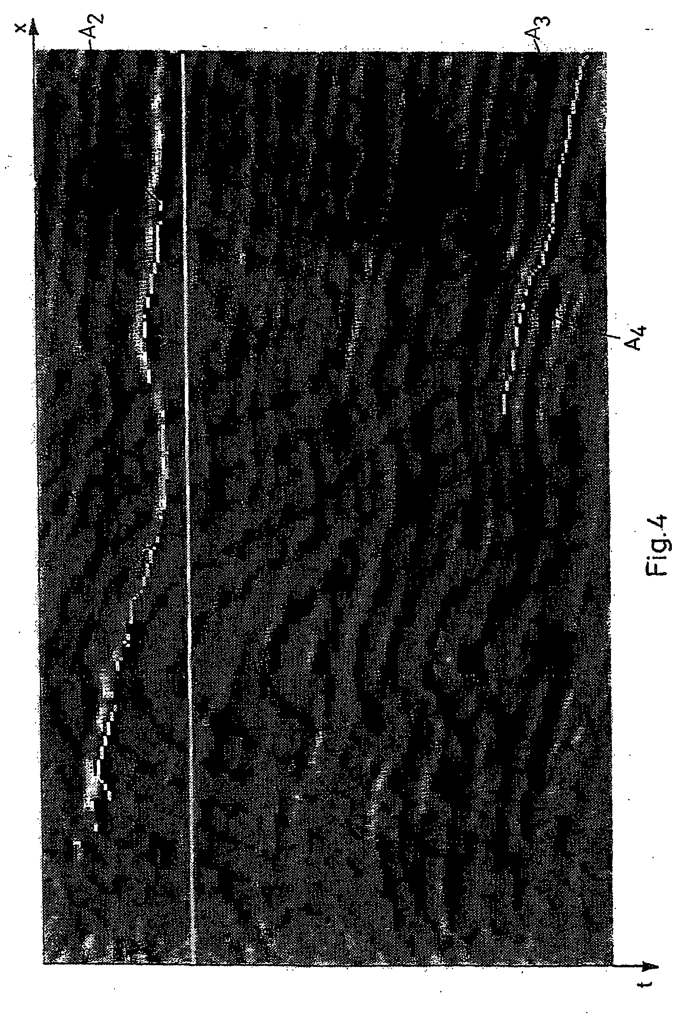

Sur la figure 4, on peut constater que l'anomalie A₂ est unique et ne présente aucun recouvrement avec une autre anomalie proche. Les anomalies A₃ et A₄ se recouvrent partiellement mais, grâce à l'extension réalisée par le propagateur, elles se distinguent nettement l'une de l'autre, avec des extrémités bien précises.

L'extension de chaque anomalie est réalisée dans toutes les directions et elle est contrôlée de proche en proche par la corrélation des traces sismiques de la frontière ou contour de ladite anomalie avec les traces sismiques voisines. L'extension de l'anomalie traitée est arrêtée lorsque ladite corrélation de contrôle présente un maximum de corrélation inférieur au seuil S. Ainsi, le propagateur retrouve le complément de l'anomalie partiellement caché par une ou plusieurs autres anomalies.

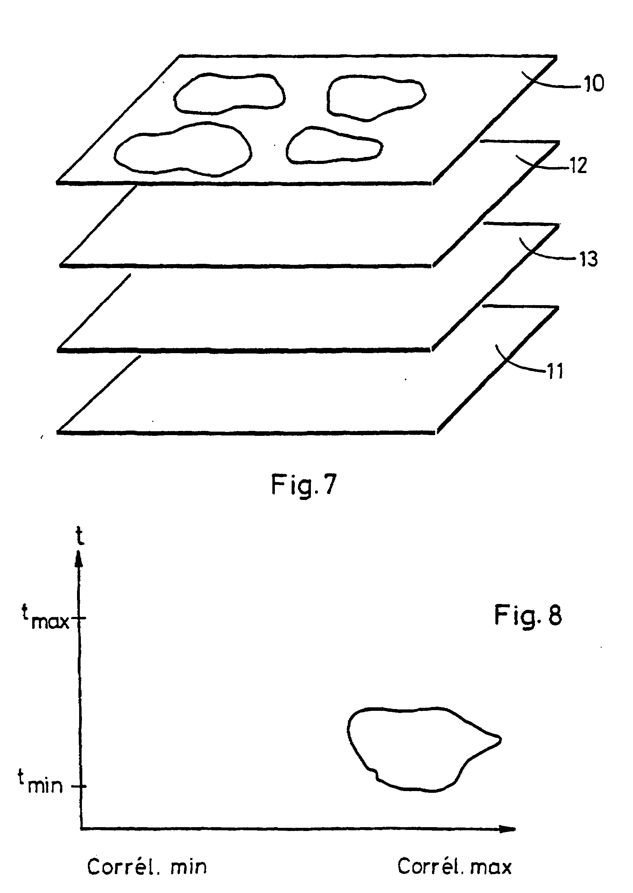

Dans une quatrième étape, on classe l'ensemble des anomalies étendues par le propagateur sous la forme de plusieurs cartes dont chacune comprend des anomalies qui ne se recouvrent pas. De préférence, les cartes de ces anomalies (figure 7) sont classées par ordre décroissant des maxima de corrélation. La carte supérieure 10 de la figure 7 correspond aux maxima de corrélation les plus élevés alors que la carte inférieure 1 correspond aux maxima de corrélation les plus faibles, les deux autres cartes 12 et 13 correspondant à des maxima de corrélation intermédiaires.

Dans une cinquième étape, on valide les anomalies en repérant les maxima de corrélation correspondant à des temps minima (figure 8).

Il est possible d'établir des fiches signalétiques pour chaque anomalie, chaque fiche signalétique comportant des renseignements relatifs à ladite anomalie comme par exemple, l'amplitude, la taille, la surface, l'origine, etc...

## Revendications

1. Procédé de localisation et d'identification des anomalies d'un milieu, **caractérisé en ce qu'**il consiste à :
- utiliser un bloc sismique donné (1) composé de traces sismiques (4) repérées par leurs coordonnées spatiales ;
- délimiter dans ledit bloc sismique au moins un intervalle temporel entre un niveau supérieur (2) et un niveau inférieur (3) ;
- sélectionner un modèle temporel (5) d'une anomalie ;
- corréler ledit modèle (5) avec chacune desdites traces (4) comprises dans ledit intervalle temporel ;
- déterminer, pour chaque trace, la corrélation maximum (Γ_{M}) et le temps (tᵢ) correspondant de ladite corrélation maximum,
- réaliser une carte (7) des corrélations maximales égale aux dimensions spatiales du bloc sismique (1) et une carte (8) desdits temps correspondant aux maxima de corrélation ; ladite carte des temps étant de mêmes dimensions et repérée dans le même système d'axes (x, y) que ladite carte des maxima de corrélation.

2. Procédé selon la revendication 1, **caractérisé en ce qu'**on segmente la carte des temps en un ensemble de zone connexes et homogènes (C₁ à C₄), chaque zone connexe et homogène étant telle qu'un point de ladite zone comprend au moins un point voisin ne présentant pas une discontinuité en temps supérieure à un seuil donné (Δt).

3. Procédé selon la revendication 2, **caractérisé en ce qu'**on sélectionne toute zone homogène dont au moins un point présente un maximum de corrélation supérieur à un seuil prédéterminé de corrélation (S).

4. Procédé selon la revendication 2, **caractérisé en ce que** chaque zone homogène présente une surface supérieure à une valeur donnée.

5. Procédé selon l'une des revendications 2 à 4, **caractérisé en ce que** chaque zone homogène est traitée individuellement par un propagateur de manière à étendre ladite zone dans toutes les directions tout en contrôlant la corrélation avec les traces sismiques voisines.

6. Procédé selon l'une des revendications 1 à 5, **caractérisé en ce que** les zones homogènes et leur extension constituent des zones anomaliques qui sont organisées en un nombre de couches (10 à 13) telles que dans chaque couche, deux zones anomaliques quelconques ne présentent aucun recouvrement entre elles.

7. Procédé selon la revendication 6, **caractérisé en ce que** les couches sont ordonnées suivant une décroissance des maxima de corrélation.

8. Procédé selon l'une des revendications 1 à 7, **caractérisé en ce qu'**on valide chaque anomalie en contrôlant les relations temps-corrélation de telle sorte que seules les anomalies présentant une corrélation maximum pour un temps minimum sont retenues.

## Patentansprüche

1. Verfahren zur Ortung und Identifizierung von Anomalien eines Mediums, **gekennzeichnet durch**:
- Verwendung eines gegebenen seismischen Blocks (1), der aus **durch** ihre Raumkoordinaten markierten seismischen Linien (4) zusammengesetzt ist;
- Abgrenzung wenigstens eines Zeitintervalls in dem seismischen Block zwischen einem höheren Pegel (2) und einem niedrigen Pegel (3);
- Auswahl eines zeitlichen Modells einer Anomalie;
- Korrelieren des Modells mit jeder der in dem Zeitintervall enthaltenen Linien (4);
- Bestimmen, für jede Linie, der Maximalkorrelation (Γ_{M}) und der dieser Maximalkorrelation entsprechenden Zeit (tᵢ) ;
- Erstellen einer Karte (7) der Korrelationsmaxima, die gleich den räumlichen Ausmaßen des seismischen Blockes (1) ist, und einer Karte (8) der Zeiten, die den Korrelationsmaxima entsprechen, wobei die Karte der Zeiten die gleichen Dimensionen hat und im gleichen Koordinatensystem (x,y) dargestellt ist, wie die Karte der Korrelationsmaxima.

2. Verfahren nach Anspruch 1, **dadurch gekennzeichnet, daß** man die Karte der Zeiten in eine Menge zusammenhängender und homogener Bereiche (C₁ bis C₄) segmentiert, wobei jeder zusammenhängende und homogene Bereich derart ist, daß ein Punkt dieses Bereiches mindestens einen Nachbarpunkt hat, der keine zeitliche Diskontinuität über einen gegebenen Schwellenwert (Δt) darstellt.

3. Verfahren nach Anspruch 2, **dadurch gekennzeichnet, daß** man jeden homogenen Bereich, bei dem mindestens ein Punkt ein über einen vorbestimmten Schwellenwert (S) liegendes Korrelationsmaximum darstellt, auswählt.

4. Verfahren nach Anspruch 2, **dadurch gekennzeichnet, daß** jeder homogene Bereich eine einen gegebenen Wert übersteigende Oberfläche darstellt.

5. Verfahren nach einem der Ansprüche 2 bis 4, **dadurch gekennzeichnet, daß** jeder homogene Bereich individuell mit einer Ausbreitungsfunktion behandelt wird, um diesen Bereich in alle Richtungen ausdehnen, wobei jedoch die Korrelation mit den benachbarten seismischen Linien kontrolliert bleibt.

6. Verfahren nach einem der Ansprüche 1 bis 5, **dadurch gekennzeichnet, daß** die homogenen Bereiche und deren Erweiterung anomale Bereiche bilden, die sich aus einer Anzahl von Schichten (10 bis 13) derart zusammensetzen, daß in jeder Schicht zwei beliebige anomale Bereiche keinerlei gegenseitige Überlappung aufweisen.

7. Verfahren nach Anspruch 6, **dadurch gekennzeichnet, daß** die Schichten nach abnehmenden Korrelationsmaxima geordnet werden.

8. Verfahren nach einem der Ansprüche 1 bis 7, **dadurch gekennzeichnet, daß** jede Anomalie erfaßt wird, indem die Beziehungen der Zeitkorrelation derart gesteuert werden, daß nur die Anomalien, die ein Korrelationsmaximum für ein Zeitminimum darstellen, festgehalten werden.

## Claims

1. Method for locating and identifying the anomalies of a medium and consisting in :
- Using a given seismic block (1) composed of seismic traces (4) located from their spatial coordinates;
- Delimiting in said seismic block at least one temporal interval between an upper level (2) and a lower level (3);
- Selecting a temporal model (5) of an anomaly ;
- Correlating said model (5) with each of said traces (4) within said temporal interval;
- Determining, for each trace, the maximum correlation (Γ_{M}) and time (tᵢ) corresponding to the said maximum correlation;
- Carrying out a map (7) of the maximum correlations equal to the spatial dimensions of the seismic block (1) and a map (8) of said times corresponding to the maxima correlation; said time map having the same dimensions and referenced in the axial system (x, y) than the said map of the maxima correlation.

2. Method according to claim 1, wherein the time map is segmented in several of connex and homogeneous zones (C₁ to C₄), each connex and homogeneous zone is such that a point in said zone comprises at least a neighbouring point not containing discontinuity in time higher than a given threshold (Δt).

3. Method according to claim 2, wherein are selected all the homogeneous zones where there is at least one point of maximum correlation above the predetermined thereshold of correlation (S).

4. Method according to claim 2, wherein each homogeneous zone is of a surface greater than a given value.

5. Method according to claim 2 to 4, wherein each homogeneous zone is dealt individually by a propagator to spread the above mentioned zone in all directions while controlling the correlation with the neighbouring seismic traces.

6. Method according to claim 1 to 5, wherein the homogeneous zones and their extension make anomalous zones which are organized in a number of layers (10 to 13) in such a way that in each layer, two anomalous zones, whatsoever, do not cover one another.

7. Method according to claim 6, wherein the layers are in decreasing order relative to their maxima correlation.

8. Method according to one of claims 1 to 7, wherein each anomaly is validated by controlling the time-correlation relationship so that only the anomalies having a maximum correlation for a minimum time are kept.
